(19) Europäisches Patentamt
European Patent Office
Office européen des brevets

(11) **EP 3 713 066 A1**

(12) **EUROPÄISCHE PATENTANMELDUNG**

(43) Veröffentlichungstag:
**23.09.2020 Patentblatt 2020/39**

(51) Int Cl.:
**H02M 3/335** (2006.01)    **H02M 1/00** (2006.01)
**H02M 7/48** (2007.01)

(21) Anmeldenummer: **19164288.3**

(22) Anmeldetag: **21.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Finkenzeller, Michael**
**80687 München (DE)**
• **Mantel, Mirjam**
**85540 Haar (DE)**
• **Poebl, Monika**
**81667 München (DE)**

(54) **GLEICHSPANNUNGSWANDLER MIT EINEM SEKUNDÄREN SCHWINGKREISKONDENSATOR, SOWIE VERFAHREN ZUM BETREIBEN EINES GLEICHSPANNUNGSWANDLERS**

(57) Die Erfindung betrifft einen Gleichspannungs-wandler (10) mit einer Primärseite (14) eines Transformatorelements (12) des Gleichspannungswandlers (10) und mit einer Sekundärseite (16) des Transformatorelements (12), wobei die Primärseite (14) eine erste Gleichrichterschaltung (18) und einen primarseitigen Schwingkreis (46) und die Sekundärseite (16) eine zweite Gleichrichterschaltung (20) und einen sekundärseitigen Energiespeicher (44) aufweisen und wobei zwischen der Primärseite (14) und der Sekundärseite (16) das Transformatorelement (12) zum Übertragen von elektrischer Energie angeordnet ist, wobei die Sekundärseite (16) einen sekundären Schwingkreiskondensator (52) aufweist. Ferner betrifft die Erfindung ein Verfahren.

**Beschreibung**

Die Erfindung betrifft einen Gleichspannungswandler mit einer Primärseite eines Transformatorelements des Gleichspannungswandlers und mit einer Sekundärseite des Transformatorelements. Auf der Primärseite sind eine erste Gleichrichterschaltung und ein primärseitiger Schwingkreis und auf der Sekundärseite ist eine zweite Gleichrichterschaltung und ein sekundärseitiger Energiespeicher ausgebildet. Zwischen der Primärseite und der Sekundärseite ist das Transformatorelement zum Übertragen von elektrischer Energie angeordnet. Ferner betrifft die Erfindung ein Verfahren zum Betreiben eines Gleichspannungswandlers.

Gleichspannungswandler, welche auch als DC-DC-Wandler bezeichnet werden, die im voll resonanten Modus betrieben werden, bestehen aus einem Schwingkreis, einem Transformatorelement und eine den Schwingkreis anregenden Halb- oder Vollbrückenschaltung. Um ein spannungsloses Schalten, den sogenannten ZVS-Betrieb (Zero-Volt-Switching) in allen relevanten Arbeitspunkten aufrechterhalten zu können, sind zusätzlich passive Bauelemente notwendig. Diese Gleichspannungswandler aus dem Stand der Technik sind jedoch lediglich im voll resonanten Modus für den unidirektionalen Betrieb, also insbesondere zum Übertragen von Energie von der Primärseite zu der Sekundärseite, ausgebildet.

Ferner sind zahlreiche Veröffentlichungen zur bidirektionalen Dual-Active-Bridge bekannt. Diese Gleichspannungswandler werden häufig hartschaltend, also mit Schaltverlusten, aufgebaut. Da der Phasenwinkel jedoch zwischen primärseitiger und sekundärseitiger Vollbrücke bei der Dual-Active-Bridge geregelt werden muss, ist das Unterbringen von Serienresonanzelementen erschwert.

Aufgabe der vorliegenden Erfindung ist es, einen Gleichspannungswandler sowie ein Verfahren zu schaffen, mittels welchem ein voll resonanter Gleichspannungswandler für beide Übertragungsrichtungen geschaffen werden kann.

Diese Aufgabe wird durch einen Gleichspannungswandler sowie durch ein Verfahren zum Betreiben eines Gleichspannungswandlers gemäß den unabhängigen Patentansprüchen gelöst. Vorteilhafte Ausführungsformen sind in den Unteransprüchen angegeben.

Ein Aspekt der Erfindung betrifft einen Gleichspannungswandler mit einer Primärseite eines Transformatorelements des Gleichspannungswandlers und mit einer Sekundärseite des Transformatorelements. Die Primärseite weist eine erste Gleichrichterschaltung und einen primärseitigen Schwingkreis und die Sekundärseite weist eine zweite Gleichrichterschaltung und einen sekundärseitigen Energiespeichers auf. Zwischen der Primärseite und der Sekundärseite ist das Transformatorelement zum Übertragen von elektrischer Energie angeordnet.

Es ist vorgesehen, dass die Sekundärseite einen sekundären Schwingkreiskondensator aufweist.

Durch das Einfügen der zusätzlichen Kapazität, also dem sekundären Schwingkreiskondensator, auf der Sekundärseite des Transformatorelements entsteht auch auf dieser Seite ein voll resonantes System, sodass für beide Übertragungsrichtungen elektrische Energie ausgetauscht werden kann. Somit kann ein bidirektionaler Gleichspannungswandler bereitgestellt werden.

Insbesondere kann es durch die Nutzung einer Induktorkombination vermieden werden, dass zusätzliche Induktivitäten für den bidirektionalen Betrieb genutzt werden müssen. Durch die Wahl einer neuen Wicklungskonfiguration verbunden mit einem großen Luftspalt innerhalb des Transformatorelements lassen sich die für die Topologie notwendig große Serieninduktivität in Form einer großen Streuung als auch die für den ZVS-Betrieb in Leerlaufnähe geringere Parallelinduktivität in ein Bauelement integrieren. Insbesondere handelt es sich dabei um eine Induktorkombination mit Potentialtrennung für den Gleichspannungswandler.

Insbesondere kann durch die Nutzung der Induktorkombination und dem zusätzlichen Einfügen des sekundären Schwingkreiskondensators auf der Sekundärseite des Transformatorelements ein bidirektionales Übertragungssystem ausgebildet werden.

Beispielsweise kann der Gleichspannungswandler zum bidirektionalen Laden und Entladen einer Kraftfahrzeugbatterie als elektrischer Energiespeicher genutzt werden. Die Kraftfahrzeugbatterie bildet somit den elektrischen Energiespeicher. Mittels Induktion durch das Transformatorelement kann die Kraftfahrzeugbatterie beispielsweise aus dem öffentlichen Netz, welches primärseitig ausgebildet ist, geladen werden. Sollte nur, beispielsweise als Zwischenspeicher für das öffentliche Netz, die Kraftfahrzeugbatterie wieder elektrische Energie an das öffentliche Netz abgeben sollen, so kann sowohl für das Laden als auch für das Entladen der Kraftfahrzeugbatterie der erfindungsgemäße Gleichspannungswandler genutzt werden. Beispielsweise in sogenannten dezentralen Energieversorgungssystemen, beispielsweise für Smart-Grids, kann so die Kraftfahrzeugbatterie als Energiespeicher für das Smart-Grid genutzt werden.

Gemäß einer vorteilhaften Ausgestaltungsform ist die zweite Gleichrichterschaltung als elektrische Vollbrücke ausgebildet. Insbesondere ist auch die erste Gleichrichterschaltung als elektrische Vollbrücke ausgebildet. Mit anderen Worten ist vorgesehen, dass es sich bei der Gleichrichterschaltung um aktive Bauelemente handelt. Je nach Leistungsflussrichtung regt die Vollbrücke der Eingangsseite den Resonanzkreis an - die variable Schaltfrequenz stellt die geforderte Ausgangsspannung ein, die Vollbrücke der Ausgangsseite arbeitet als aktiver Gleichrichter. Beispielsweise kann die jeweilige Vollbrücke entsprechende Halbleiterschalter, beispielsweise MOSFET's aufweisen. Diese Halbleiterschalter können beispielsweise mittels einer elektronischen Recheneinrichtung derart angesteuert werden, dass diese

elektrische Energie durchschalten, oder sperren. Dadurch ist es ermöglicht, dass mit der aktiven Gleichrichtung auf der Sekundärseite ein vollresonantes bidirektionales Übertragungssystem ausgebildet ist.

In einer weiteren vorteilhaften Ausgestaltungsform ist eine primärseitige Wicklungsanzahl des Transformatorelements gleich einer sekundärseitigen Wicklungsanzahl des Transformatorelements ausgebildet. Mit anderen Worten hat in dieser Ausprägungsform das Transformatorelement primärseitig genauso viele Wicklungen wie sekundärseitig. Mit anderen Worten wird ein Übertragungsverhältnis von 1:1 bereitgestellt. Dadurch ist es ermöglicht, dass ähnliche Ein- und Ausgangsspannungsbereiche sowie ähnliche Bereiche der Schaltfrequenz mittels des Gleichspannungswandlers erzielt werden können.

Weiterhin vorteilhaft ist, wenn auf der Primärseite eine primäre Streuinduktivität mit einem ersten Induktivitätswert und auf der Sekundärseite eine sekundäre Streuinduktivität mit einem zweiten Induktivitätswert angeordnet sind, wobei der erste Induktivitätswert und der zweite Induktivitätswert gleich sind. Mit anderen Worten ist eine primärseitige Streuinduktivität gleich einer sekundärseitigen Streuinduktivität. Die Kopplung liegt dann sinnvollerweise in einem Bereich von 60 Prozent bis 80 Prozent. Insbesondere ist es dadurch ermöglicht, dass ähnliche Ein- und Ausgangsspannungsbereiche sowie ähnliche Bereiche der Schaltfrequenz mittels des Gleichspannungswandlers erzielt werden können.

Ferner hat es sich als vorteilhaft erwiesen, wenn ein erster Kondensatorwert eines primären Schwingkreiskondensators des primärseitigen Schwingkreises gleich einem zweiten Kondensatorwert des sekundären Schwingkreiskondensators ist. Dadurch ist es insbesondere ermöglicht, dass ähnliche Ein- und Ausgangsspannungsbereiche und Bereiche der Schaltfrequenz der Vollbrücken realisiert werden können.

In einer weiteren vorteilhaften Ausgestaltungsform ist eine primärseitige Wicklungsanzahl des Transformatorelements ungleich einer sekundärseitigen Wicklungsanzahl des Transformatorelements ausgebildet. Dadurch ist ermöglicht, dass verschiedene Ein- und Ausgangsspannungsbereiche und Bereiche der Schaltfrequenz der Vollbrücken realisiert werden können. Mit anderen Worten ist das Übersetzungsverhältnis des Transformatorelements ungleich 1:1. Dies kann insbesondere dann sinnvoll sein, wenn sich der sekundärseitige DC-Spannungsbereich deutlich vom primärseitigen unterscheidet.

In einer weiteren vorteilhaften Ausgestaltungsform ist ein zweiter Kondensatorwert des sekundären Schwingkreiskondensators als Produkt aus einem ersten Kondensatorwert eines ersten Schwingkreiskondensators des Schwingkreises und einem Quotienten aus einer primären Streuinduktivität der Primärseite und einer zweiten Streuinduktivität der Sekundärseite ausgebildet. Um dann beispielsweise bei einem ungleichen Übersetzungsverhältnis des Transformatorelements ähnliche Schaltfrequenzbereiche der Gleichrichterschaltungen zu erhalten, wird:

$$C2_{sek} = C1_{prim} \cdot Lsig_{prim}/Lsig_{sek};$$

gewählt. $C2_{sek}$ entspricht dabei dem sekundären Schwingkreiskondensator, $C1_{prim}$ dem ersten Schwingkreiskondensator, $Lsig_{prim}$ der primären Streuinduktivität und $Lsig_{sek}$ der zweiten Streuinduktivität. Alternativ sind auch andere Werte für $C2_{sek}$ möglich. Somit können insbesondere ähnliche Schaltfrequenzbereiche der beiden Gleichrichterschaltungen, insbesondere der beiden Vollbrücken, ausgebildet werden.

Weiterhin vorteilhaft ist, wenn zumindest der sekundäre Schwingkreiskondensator als Serienkondensator ausgebildet ist. Insbesondere ist auch der erste Schwingkreiskondensator als Serienkondensator ausgebildet. Dadurch kann einfach und dennoch zuverlässig der bidirektionale Betrieb des Gleichspannungswandlers realisiert werden.

Ebenfalls vorteilhaft ist, wenn zumindest der sekundäre Schwingkreiskondensator als Parallelkondensator ausgebildet ist. Insbesondere kann auch der primäre Schwingkreiskondensator als Parallelkondensator ausgebildet sein. Der bidirektionale Betrieb und der Charakter des Resonanzwandlers, der durch die Variation der Schaltfrequenz der eingangsseitigen Gleichrichterschaltungen, insbesondere der Vollbrücke, die Ausgangsspannung stellt, bleibt dabei erhalten. Somit ist es auf unterschiedliche Art und Weise ermöglicht, den bidirektionalen Betrieb des Gleichspannungswandlers realisieren zu können.

Gemäß einer weiteren vorteilhaften Ausgestaltungsform ist zusätzlich zum sekundären Schwingkreiskondensator eine serielle Induktivität geschaltet. Dadurch ist es ermöglicht, dass der bidirektionale Resonanzwandlerbetrieb des Gleichspannungswandlers auch mit einem klassischen Transformatorelement realisiert werden kann. Insbesondere wird dann zusätzlich zu dem neu eingeführten sekundären Schwingkreiskondensator und insbesondere auch der sekundärseitigen Vollbrücke eine serielle Induktivität, mit anderen Worten eine serielle Drossel, geschaltet. Somit kann auch bei einem serienmäßigen Transformatorelement, also insbesondere bei einem Nichtvorhandensein einer Induktorkombination, ein bidirektionaler Betrieb des Gleichspannungswandlers realisiert werden.

Ein weiterer Aspekt der Erfindung betrifft ein Verfahren zum Betreiben eines Gleichspannungswandlers mit einer Primärseite eines Transformatorelements des Gleichspannungswandlers und mit einer Sekundärseite des Transformatorelements. Es werden die Primärseite mit einer ersten Gleichrichterschaltung und einem primärseitigen Schwingkreis und die Sekundärseite mit einer zweiten Gleichrichterschaltung und einem sekundärseitigen Energiespeicher bereitgestellt. Es wird zwischen der Primärseite und der Sekundärseite elektrische Energie übertragen.

Es ist vorgesehen, dass mittels eines sekundären Schwingkreiskondensators der Sekundärseite bidirektional elektrische Energie von der Primärseite zu der Sekundärseite oder von der Sekundärseite zu der Primärseite übertragen wird.

Mit anderen Worten kann bei dem Verfahren ein bidirektionaler Betrieb des Gleichspannungswandlers durchgeführt werden.

Vorteilhafte Ausgestaltungsformen des Gleichspannungswandlers sind als vorteilhafte Ausgestaltungsformen des Verfahrens anzusehen. Der Gleichspannungswandler weist dazu gegenständliche Merkmale auf, um eine Durchführung des Verfahrens oder eine vorteilhafte Ausgestaltungsform davon zu ermöglichen. Das Verfahren wir insbesondere mittels des Gleichspannungswandlers durchgeführt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

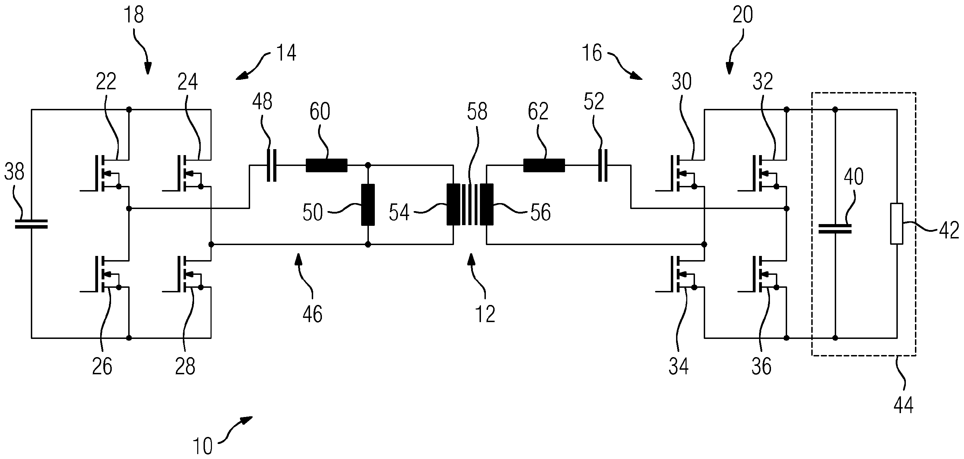

Die Erfindung wird nun anhand von einem bevorzugten Ausführungsbeispiel sowie unter Bezugnahme auf die beigefügte Zeichnung näher erläutert.

Dabei zeigt die einzige Figur ein schematisches Ersatzschaltbild einer Ausführungsform eines Gleichspannungswandlers.

Die Figur zeigt ein schematisches Ersatzschaltbild einer Ausführungsform eines Gleichspannungswandlers 10. Der Gleichspannungswandler 10 weist Transformatorelemente 12 auf. Das Transformatorelement 12 weist eine Primärseite 14 und eine Sekundärseite 16 auf. Auf der Primärseite 14 ist eine erste Gleichrichterschaltung 18 ausgebildet, welche insbesondere als elektrische Vollbrücke ausgebildet ist. Auf der Sekundärseite 16 ist eine zweite Gleichrichterschaltung 20 ausgebildet, welche insbesondere als elektrische Vollbrücke ausgebildet ist. Die erste Gleichrichterschaltung 18 weist im vorliegenden Ausführungsbeispiel vier aktive Bauelemente auf, insbesondere vier MOSFETs 22 bis 28, wobei durch einen ersten MOSFET 22, einen zweiten MOSFET 24, einen dritten MOSFET 26 und einem vierten MOSFET 28 die erste Gleichrichterschaltung 18 ausgebildet ist.

Die zweite Gleichrichterschaltung 16 weist ebenfalls vier MOSFETs 30 bis 36 auf, wobei die zweite Gleichrichterschaltung 16 durch einen fünften MOSFET 30, einen sechsten MOSFET 32, einen siebten MOSFET 34 und einem achten MOSFET 36 ausgebildet ist.

Insbesondere weist die Primärseite 14 eine Zwischenkreiskapazität 38 auf, welche insbesondere mit einem Energiespeichernetz, was nicht dargestellt ist, gekoppelt ist. Ferner ist sekundärseitig eine Batteriekapazität 40 und ein Batteriewiderstand 42 dargestellt. Insgesamt kann mittels der Batteriekapazität 40 und dem Batteriewiderstand 42 ein sekundärseitiger Energiespeicher 44 bereitgestellt werden.

Die Primärseite 14 weist ferner einen primärseitigen Schwingkreis 46 auf. Der primärseitige Schwingkreis 46 ist insbesondere durch einen primären Schwingkreiskondensator 48 und einer primären Schwingkreisinduktivität 50 gebildet.

Ein Aspekt der Erfindung betrifft den Gleichspannungswandler 10 mit der Primärseite 14 des Transformatorelements 12 und mit der Sekundärseite 16. Die Primärseite 14 weist die erste Gleichrichterschaltung 18 auf. Die Sekundärseite 16 weist die zweite Gleichrichterschaltung 20 auf. Ferner weist die Sekundärseite den sekundärseitigen Energiespeicher 44 auf. Zwischen der Primärseite 14 und der Sekundärseite 16 ist das Transformatorelement 12 zum Übertragen von elektrischer Energie angeordnet.

Es ist vorgesehen, dass die Sekundärseite 16 einen sekundären Schwingkreiskondensator 52 aufweist.

Insbesondere werden dadurch die Induktivitäten gemäß dem Stand der Technik nicht mehr benötigt. Insbesondere ist der Gleichspannungswandler 10 als Induktorkombination mit Potentialtrennung für den Gleichspannungswandler 10 bereitgestellt. Durch die Wahl einer neuen Wicklungskonfiguration im Transformatorelement 12 verbunden mit einem großen Luftspalt 58 lassen sich die für die Topologie notwendigen großen Serieninduktivitäten in Form einer großen Streuung als auch die für den ZVS-Betrieb in Leerlaunähe geringe Parallelinduktivität in ein Bauelement, nämlich der Induktorkombination, integrieren. Durch die Kombination mit dem sekundären Schwingkreiskondensator 52 entsteht auch auf der Sekundärseite 16 ein vollresonantes System für eine bidirektionale Übertragung von elektrischer Energie.

Insbesondere wird beim Verfahren zum Betreiben des Gleichspannungswandlers 10 mit der Primärseite 14 des Transformatorelements 12 und mit der Sekundärseite 16 des Transformatorelements 12 die Primärseite mit der ersten Gleichrichterschaltung 18 und dem primärseitigen Schwingkreis 46 bereitgestellt. Die Sekundärseite 16 wird mit der zweiten Gleichrichterschaltung 16 und mit dem sekundärseitigen Energiespeicher 44 bereitgestellt. Zwischen der Primärseite 14 und der Sekundärseite 16 wird elektrische Energie übertragen.

Es ist vorgesehen, dass mittels des sekundären Schwingkreiskondensators 52 der Sekundärseite 16 bidirektional elektrische Energie von der Primärseite 14 zu der Sekundärseite 16 oder von der Sekundärseite 16 zu der Primärseite 14 übertragen wird.

Insbesondere ist vorgesehen, dass die zweite Gleichrichterschaltung 20 als elektrische Vollbrücke ausgebildet ist. Ferner kann eine primärseitige Wicklungsanzahl 54 des Transformatorelements 12 gleich einer sekundärseitigen Wicklungszahl 56 des Transformatorelements 12 ausgebildet sein.

Ferner kann vorgesehen sein, dass auf der Primärseite 14 eine primäre Streuinduktivität 60 mit einem ersten Induktivitätswert und auf der Sekundärseite 16 eine sekundäre Streuinduktivität 62 mit einem zweiten Induktivitätswert angeordnet sind, wobei der erste Induktivitätswert und der zweite Induktivitätswert gleich sind.

Ferner kann vorgesehen sein, dass ein erster Kondensatorwert des primären Schwingkreiskondensators 48 des primärseitigen Schwingkreises 46 gleich einem zweiten Kondensatorwert des sekundären Schwingkreiskondensators 52 ist.

Insbesondere kann in dieser Ausprägungsform beispielsweise das Transformatorelement 12 primärseitig genauso viele Wicklungen wie sekundärseitig, also im Übertragungsverhältnis von 1:1, aufweisen, die primäre Streuinduktivität 60 ist dann insbesondere gleich der sekundären Streuinduktivität 62. Die Kopplung liegt dann sinnvollerweise in einem Bereich von 60 Prozent bis 80 Prozent. Die Eigenfrequenz der jeweiligen Seite und damit die jeweiligen Kondensatorwerte der Schwingkreiskondensatoren 48, 52 können gleich gewählt werden oder sich unterscheiden, um im ersten Fall ähnliche und im zweiten Fall verschiedene Ein- und Ausgangsspannungsbereiche und Bereiche der Schaltfrequenz der Vollbrücken zu realisieren.

In einer weiteren Ausprägung kann das Übersetzungsverhältnis des Transformatorelements 12 ungleich 1:1 gewählt werden. Das ist sinnvoll, wenn sich der sekundärseitige DC-Spannungsbereich deutlich vom primärseitigen unterscheidet. Mit anderen Worten wird die primärseitige Wicklungszahl 54 des Transformatorelements 12 ungleich der sekundärseitigen Wicklungszahl 56 des Transformatorelements 12 ausgebildet. Insbesondere kann dann vorgesehen sein, dass der zweite Kondensatorwert des sekundären Schwingkreiskondensators 52 dem Kondensatorwert des ersten Schwingkreiskondensators 48 des primärseitigen Schwingkreises 46 und einem Quotienten aus der primären Streuinduktivität 50 der Primärseite 14 und der zweiten Streuinduktivität 62 der Sekundärseite 14 ausgebildet ist.

Ferner kann insbesondere vorgesehen sein, dass der sekundäre Schwingkreiskondensator 52 als Serienkondensator ausgebildet ist. Dies ist in der Figur gezeigt. Alternativ kann auch vorgesehen sein, dass der sekundäre Schwingkreiskondensator 52 als Parallelkondensator ausgebildet ist.

Ferner kann vorgesehen sein, dass der primäre Schwingkreiskondensator 48 als Serienkondensator ausgebildet ist. Der primäre Schwingkreiskondensator 48 kann alternativ als Parallelkondensator ausgebildet sein. Insbesondere kann dadurch der bidirektionale Betrieb und der Charakter des Resonanzwandlers, der durch Variation der Schaltfrequenz der eingangsseitigen Vollbrücke die Ausgangsspannung stellt, dabei erhalten bleiben.

Ferner kann vorgesehen sein, dass zusätzlich zum sekundären Schwingkreiskondensator 52 eine serielle Induktivität, welche in der vorliegenden Figur nicht gezeigt ist, geschaltet ist. Dadurch ist es möglich, den bidirektionalen Resonanzwandler, mit anderen Worten den Gleichspannungswandler 10, mit einem klassischen Transformator aufzubauen. Hierzu wird dann zusätzlich zu dem neu eingeführten sekundären Schwingkreiskondensator 52 die serielle Induktivität, insbesondere eine serielle Drossel, benötigt.

Insgesamt zeigt die Figur ein neuartiges Aufbaukonzept, bei dem zusätzlichen Einfügen des sekundären Schwingkreiskondensators 52 auf der Sekundärseite 16 des Transformatorelements 12 und einer aktiven Gleichrichtung auf der Sekundärseite 16 ein vollresonantes bidirektionales Übertragungssystem entstehen kann.

Bezugszeichenliste

| | |
|---|---|
| 10 | Gleichspannungswandler |
| 12 | Transformatorelement |
| 14 | Primärseite |
| 16 | Sekundärseite |
| 18 | erste Gleichrichterschaltung |
| 20 | zweite Gleichrichterschaltung |
| 22 | erster MOSFET |
| 24 | zweiter MOSFET |
| 26 | dritter MOSFET |
| 28 | vierter MOSFET |
| 30 | fünfter MOSFET |
| 32 | sechster MOSFET |
| 34 | siebter MOSFET |
| 36 | achter MOSFET |
| 38 | Zwischenkreiskapazität |
| 40 | Batteriekapazität |
| 42 | Batteriewiederstand |
| 44 | sekundärseitiger Energiespeicher |
| 46 | primärseitiger Schwingkreis |
| 48 | primärer Schwingkreiskondensator |
| 50 | primäre Schwingkreisinduktivität |
| 52 | sekundärer Schwingkreiskondensator |
| 54 | primärseitige Wicklungszahl |
| 56 | sekundärseitige Wicklungszahl |
| 58 | Luftspalt |
| 60 | primäre Streuinduktivität |
| 62 | sekundäre Streuinduktivität |

Patentansprüche

1. Gleichspannungswandler (10) mit einer Primärseite (14) eines Transformatorelements (12) des Gleichspannungswandlers (10) und mit einer Sekundärseite (16) des Transformatorelements (12), wobei die Primärseite (14) eine erste Gleichrichterschaltung (18) und einen primarseitigen Schwingkreis (46) und die Sekundärseite (16) eine zweite Gleichrichterschaltung (20) und einen sekundärseitigen Energiespeicher (44) aufweisen, und wobei zwischen der Primärseite (14) und der Sekundärseite (16) das Transformatorelement (12) zum Übertragen von elektrischer Energie angeordnet ist, **dadurch gekennzeichnet, dass** die Sekundärseite (16) einen sekundären Schwingkreiskondensator (52) aufweist.

2. Gleichspannungswandler (10) nach Anspruch 1, **dadurch gekennzeichnet, dass** die zweite Gleichrichterschaltung (20) als elektrische Vollbrücke ausgebildet ist.

3. Gleichspannungswandler (10) nach Anspruch 1 oder 2, **dadurch gekennzeichnet, dass** eine primärseitige Wicklungsanzahl (54) des Transformatorelements (12) gleich einer sekundärseitigen Wicklungsanzahl (56) des Transformatorelements (12) ausgebildet ist.

4. Gleichspannungswandler (10) nach Anspruch 3, **dadurch gekennzeichnet, dass** auf der Primärseite (14) eine primäre Streuinduktivität (60) mit einem ersten Induktivitätswert und auf der Sekundärseite (16) eine sekundäre Streuinduktivität (62) mit einem zweiten Induktivitätswert angeordnet sind, wobei der erste Induktivitätswert und der zweite Induktivitätswert gleich sind.

5. Gleichspannungswandler (10) nach Anspruch 3 und/oder 4, **dadurch gekennzeichnet, dass** ein erster Kondensatorwert eines primären Schwingkreiskondensators (48) des primärseitigen Schwingkreises (46) gleich einem zweiten Kondensatorwert des sekundären Schwingkreiskondensators (52) ist.

6. Gleichspannungswandler (10) nach Anspruch 1 oder 2, **dadurch gekennzeichnet, dass** eine primärseitige Wicklungsanzahl (54) des Transformatorelements (12) ungleich einer sekundärseitigen Wicklungsanzahl (56) des Transformatorelements (12) ausgebildet ist.

7. Gleichspannungswandler (10) nach Anspruch 6, **dadurch gekennzeichnet, dass** ein zweiter Kondensatorwert des sekundären Schwingkreiskondensators (52) als Produkt aus einem ersten Kondensatorwert eines ersten Schwingkreiskondensators (48) des primärseitigen Schwingkreises (46) und einem Quotienten aus einer primären Streuinduktivität (60) der Primärseite (14) und einer zweiten Streuinduktivität (62) der Sekundärseite (16) ausgebildet ist.

8. Gleichspannungswandler (10) nach einem der vorhergehenden Ansprüche, **dadurch gekennzeichnet, dass** zumindest der sekundäre Schwingkreiskondensator (52) als Serienkondensator ausgebildet ist.

9. Gleichspannungswandler (10) nach einem der Ansprüche 1 bis 7, **dadurch gekennzeichnet, dass** zumindest der sekundäre Schwingkreiskondensator (52) als Parallelkondensator ausgebildet ist.

10. Gleichspannungswandler (10) nach einem der vorhergehenden Ansprüche, **dadurch gekennzeichnet, dass** zusätzlich zum sekundären Schwingkreiskondensator (52) eine serielle Induktivität geschaltet ist.

11. Verfahren zum Betreiben eines Gleichspannungswandlers (10) mit einer Primärseite (14) eines Transformatorelements (12) des Gleichspannungswandlers (10) und mit einer Sekundärseite (16) des Transformatorelements (12), wobei die Primärseite (14) mit einer ersten Gleichrichterschaltung (18) und einem primarseitigen Schwingkreis (46) und die Sekundärseite (16) mit einer zweiten Gleichrichterschaltung (20) und einem sekundärseitigen Energiespeicher (44) bereitgestellt werden und wobei zwischen der Primärseite (14) und der Sekundärseite (16) elektrische Energie übertragen wird, **dadurch gekennzeichnet, dass** mittels eines sekundären Schwingkreiskondensators (52) der Sekundärseite (16) bidirektional elektrische Energie von der Primärseite (14) zu der Sekundärseite (16) oder von der Sekundärseite (16) zu der Primärseite (14) übertragen wird.

EP 3 713 066 A1

Europäisches
Patentamt

European
Patent Office

Office européen
des brevets

**EUROPÄISCHER RECHERCHENBERICHT**

Nummer der Anmeldung

EP 19 16 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 597 766 A2 (FUG ELEKTRONIK GMBH [DE]) 29. Mai 2013 (2013-05-29) * Abbildungen 1, 4 * * Absatz [0028] * * Absatz [0030] - Absatz [0031] * * Absatz [0019] * * Absatz [0006] * ----- | 1-11 | INV. H02M3/335 ADD. H02M1/00 H02M7/48 |
| X | US 2015/381064 A1 (MATSUBARA KUNIO [JP] ET AL) 31. Dezember 2015 (2015-12-31) * Abbildung 5 * * Absatz [0006] * ----- | 1-11 | |
| X | CN 102 064 707 A (UNIV ZHEJIANG) 18. Mai 2011 (2011-05-18) * Abbildung 1 * ----- | 1-11 | |
| X | CN 104 184 323 A (ZTE QUANTUM CO LTD) 3. Dezember 2014 (2014-12-03) * Abbildung 1 * ----- | 1-11 | |

RECHERCHIERTE
SACHGEBIETE (IPC)

H02M

Der vorliegende Recherchenbericht wurde für alle Patentansprüche erstellt

| Recherchenort | Abschlußdatum der Recherche | Prüfer |
|---|---|---|
| Den Haag | 12. September 2019 | Madouroglou, E |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 4288

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2019

| Im Recherchenbericht angeführtes Patentdokument | Datum der Veröffentlichung | Mitglied(er) der Patentfamilie | Datum der Veröffentlichung |
|---|---|---|---|
| EP 2597766 A2 | 29-05-2013 | DE 102011119355 A1<br>EP 2597766 A2 | 23-05-2013<br>29-05-2013 |
| US 2015381064 A1 | 31-12-2015 | CN 105191100 A<br>EP 3021474 A1<br>JP 6172277 B2<br>JP WO2015004989 A1<br>KR 20160029725 A<br>US 2015381064 A1<br>WO 2015004989 A1 | 23-12-2015<br>18-05-2016<br>02-08-2017<br>02-03-2017<br>15-03-2016<br>31-12-2015<br>15-01-2015 |
| CN 102064707 A | 18-05-2011 | KEINE | |
| CN 104184323 A | 03-12-2014 | KEINE | |